# EUROPEAN PATENT APPLICATION

(11) **EP 1 061 309 A1**
(43) Date of publication of application: **20.12.2000**
(21) Application number: 00202119.4
(22) Date of filing: 16.06.2000
(51) Int. Cl.: F24D 3/16, F28F 1/20, A01G 9/24, A01G 9/02

(54) **A method for the manufacture of a heating pipe, cooling pipe or cultivating through provided with a pipe**

(30) Priority: 16.06.1999 NL 1012350; 26.10.1999 NL 1013391
(71) Applicant: Frans van Zaal B.V., 1424 PX De Kwakel (NL)
(72) Inventor: Marks, Robert Jan, 2182 RH Hillegom (NL); van Zaal, Franciscus Johannes Maria, 1428 RW Vrouwenakker (NL)
(74) Representative: Prins, Adrianus Willem

(57) **Abstract**

A method for manufacturing a heating pipe or cooling pipe, wherein a section is formed around a pipe, such that the section substantially surrounds the pipe and connects thereto, which section comprises at least one section part extending in a direction away from the pipe, to increase the heat-transferring surface of the pipe, wherein the pipe, together with the section, is mounted in a position of use.

## Description

The invention relates to a method for the manufacture of a heating pipe, cooling pipe or cultivating trough. More in particular, the invention relates to a for the manufacture of a heating pipe, cooling pipe or cultivating trough which can be provided at the place of use.

It is known to incorporate a heating pipe in a radiation panel made of metal plate, such that the heat-transferring surface is increased by the radiation panel. This known radiation panel comprises two radiation panel parts located in one plane, connected together by a circular segment-shaped intermediate part. The free longitudinal edges of the panel parts are bent over at right angles. The radiation panels, which each have a limited length, are fastened, for instance, to a ceiling and are welded together to obtain a continuous section. Subsequently, pipe elements are mounted in the intermediate parts connecting to each other, which pipe elements are also welded together to obtain a continuous heating pipe.

This known method has the drawback that first the radiation panels are to be made and placed, after which the pipe parts can be mounted in the radiating sections. Moreover, a relatively large number of welded connections for both the radiation panels and the pipe parts are to be provided to obtain the desired heating pipe. This is time-consuming and expensive, in particular where great lengths are involved, such as, for instance, in greenhouses, factory buildings and the like. Moreover, these welds lead to the risk of leakage, and the heat transfer and the appearance of the heating pipe can thus be adversely affected.

It is an object of the invention to provide a method of the type described in the opening paragraph, in which the above drawbacks of the known method are avoided, while maintaining the advantages thereof. To this end, a method according to the invention is characterized by the measures according to claim 1.

In a method according to the invention the plate section is formed around the pipe, such that the pipe lies with the outside at least partly against the plate section. This results in a good heat-transferring contact between the pipe and the plate section. Subsequently, the composed heating pipe, cooling pipe or cultivating trough is mounted in place. Because the heating pipe, cooling pipe or cultivating trough can thus be composed substantially at the place of use, relatively few manufacturing and mounting operations are necessary, while a relatively large heat-transferring surface of the section is obtained notwithstanding. Furthermore, a better connection between the pipe and the plate section can thus be obtained.

In an advantageous further embodiment a method according to the invention is characterized by the measures according to claim 2.

The use of a roll forming device for manufacturing the section from band material, around the pipe, has the advantage that the desired section can be formed very rapidly and accurately, while lying against at least part of the pipe. Moreover, this has the advantage that very great lengths can be made without welded connections, which reduces the mounting operations to a minimum. Moreover, this reduces thermal stresses, if any, to a minimum.

In a very advantageous embodiment a method according to the invention is further characterized by the measures according to claim 3.

The use of a flexible pipe, in particular a plastic hose, has the advantage that the number of connections in the pipe may be reduced to a minimum as well. The flexible pipe may, for instance, be fed from a reel and formed, together with the plate section, to the desired heating pipe, cooling pipe or cultivating trough in a roll forming device or comparable rolling device. Because the plate section is formed around the pipe and surrounds it preferably for the greater part, the pipe is, moreover, well protected.

The pipe preferably has a passage which is relatively small as compared to the heat-transferring surface of the plate section, so that the thermal capacity of liquid flowing through the pipe can be optimally used.

With a method according to the invention, heating pipes, cooling pipes or cultivating troughs having a very great length can be manufactured without connections. Thus, for instance, pipes having a length of more than 6 m or more than 12 m can be manufactured without connections such as welds. Lengths of more than 100 m without connections are even possible.

The invention further relates to a heating pipe, cooling pipe or cultivating trough characterized by the measures according to claim 7.

Such a heating pipe, cooling pipe or cultivating trough is very advantageous in manufacture and use, since relatively great lengths of such pipes or cultivating troughs can be relatively easily formed without connections. The pipe is well protected by the surrounding plate section, while, moreover, a large heat-transferring surface is obtained. Because the plate section is formed around the pipe, there is a good contact between the outside of the pipe and the plate section. In particular when the cultivating trough is involved, the growth of the crop in the cultivating trough can be excellently regulated by keeping the troughs at the desired temperature. If required, instead of a closed pipe the pipe may be provided throughout its length with outflow openings or drainage openings which are in fluid communication with the inside of the trough. Thus the cultivating medium in the trough can be simply wetted or the cultivating material can be drained.

The section is preferably manufactured from a metal section, provided with a coating which is anticorrosive and promotes heat transfer. This results in a heating pipe, cooling pipe or cultivating trough which is relatively insensitive to corrosion, also on the side facing the pipe, and has excellent heat-transferring properties.

The invention additionally relates to the use of a roll forming device for forming a heating pipe, cooling pipe or cultivating trough, characterized by the measures according to claim 14.

Further advantageous embodiments of a method and a heating pipe, cooling pipe or cultivating trough according to the invention are at least given in the further subclaims.

In explanation of the invention practical examples of a method and heating or cooling pipe will be described with reference to the drawing. In this drawing:
Fig. 1 is a cross-sectional side view of a heating pipe according to the invention taken on the line I-I in Fig. 2;
Fig. 2 is a front view of a part of a heating pipe according to the invention;
Fig. 3 schematically shows the formation of a heating pipe of Figs. 1 and 2 by means of a roll forming device; and
Fig. 4 is a cross-sectional view of a cultivating trough with a pipe formed integrally therewith.

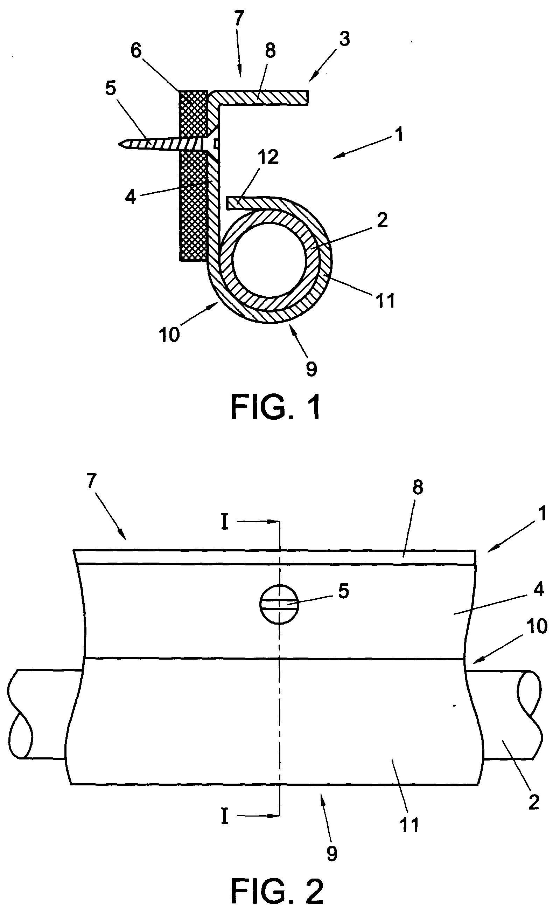

Fig. 1 is a cross-sectional side view of a heating pipe 1 according to the invention, of which a front view is shown in Fig. 2. The heating pipe 1 comprises a pipe 2 and a plate section 3, which, in the embodiment shown, will be further described below.

The pipe 2 is a flexible pipe, in particular a plastic hose having an inner cross-section which is relatively small as compared to the length. The cross-section is, for instance, 25 mm, the length many meters, for instance 16, 20, 50 or 100 m. The plate section 3 is made of a basically flat metal plate having a small thickness, for instance a few millimeters or a few tenths of millimeters, and a small width, for instance a few decimeters, as compared to the length, which may be many meters, for instance of the order of the length of the pipe, on both sides preferably provided with an anticorrosive and heat transfer-increasing coating, preferably a lacquer. The plate section 3 comprises a substantially flat first part 4, which can be fastened, for instance to a wall (not shown), with a screw 5, which extends through a bore in the first part 4. If required, an insulating strip 6 can be interposed between the wall and the first part 4. At the top 7 the plate part is bent over approximately at right angles for the sake of strength to form, at least in the position shown in Fig. 1, a horizontally extending upper lip 8. Along this upper lip 8, for instance a trolley, such as a platform trolley, may be moved. At the opposite bottom 9 a second part 10 of the plate part is bent around the pipe 2 to form a, in side view, substantially circular segment-shaped part 11, which lies against the outside of the pipe 2. The free end 12 of the second part 10 is approximately flat and lies practically against the first part 4 of the plate part 3. As a result of the intensive contact between the outside of the pipe 2 and the circular segment-shaped part 11 of the plate part 3, a good heat transfer is obtained between liquid, such as water, flowing through the pipe 2 during use and the plate part 3. The plate part 3 has a large surface as compared to the outer surface of the pipe 2, which results in a large radiating surface. Thus, for instance, for a pipe having a cross-section of 25 mm a plate section can be used of which the upper face 8 has a width of, for instance, 30 mm and the first part 4 has a height of approximately 80 mm, while the second part 10 has a length of likewise approximately 80 mm, bent around the pipe 2.

A heating pipe according to the invention is used, for instance, in greenhouses. The heating pipe 1 is laid, for instance, in, at least on, a seed bed, such as a flower bed, such that heat can be given off by convection and radiation. Warm water flows through the heating pipe. Contrary to what is indicated in Fig. 1, the strip of insulating material 6 and the screw 5 may be omitted. The pipe 1 may be laid, for instance, on bows or directly on the seed bed.

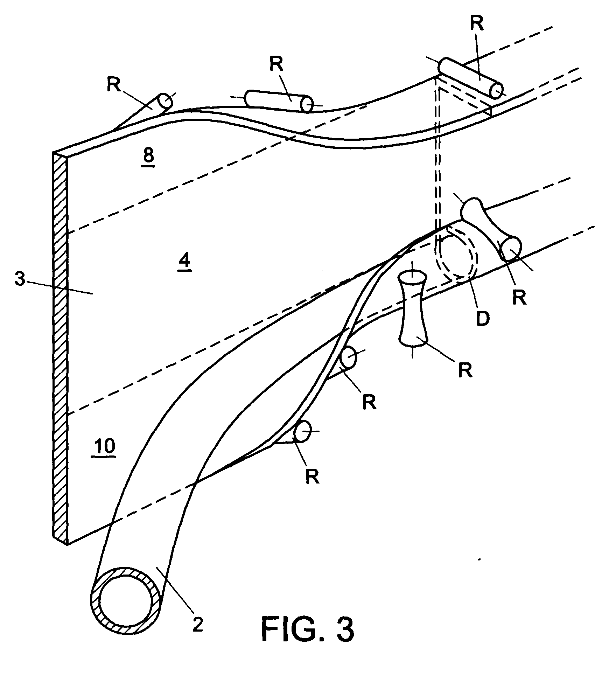

Fig. 3 schematically shows the manufacture of a heating pipe 1 according to the invention, in which similar parts have similar reference numerals. In Fig. 3 the cross-section of Fig. 1 is shown in broken lines and designated by the letter D. In Fig. 3 a number of rollers R is schematically shown, which belong to a roll forming device not shown, which is arranged to form, by means of the rollers R and from the metal section fed on the left-hand side of Fig. 3 as flat section, for instance from a reel, the desired plate section 3 around the pipe 2, as in Fig. 3 on the right-hand side of the cross-section D shown in broken lines. The pipe 2 is fed into the roll forming device simultaneously with the flat plate 3, so that at least the second part 10 can be bent around the pipe 2, such that the pipe 2 is enclosed in the plate section 3. Since both the plate section 3 and the pipe 2 fed from, for instance, the reel have a very great length, for instance 12 or 16 m or even more, a heating or cooling pipe 1 having, for instance, a cross-section as shown in Fig. 1 can be formed practically continuously by means of a device as schematically shown in Fig. 3. It is not necessary to provide connections in the pipe 2 or in the section 3.

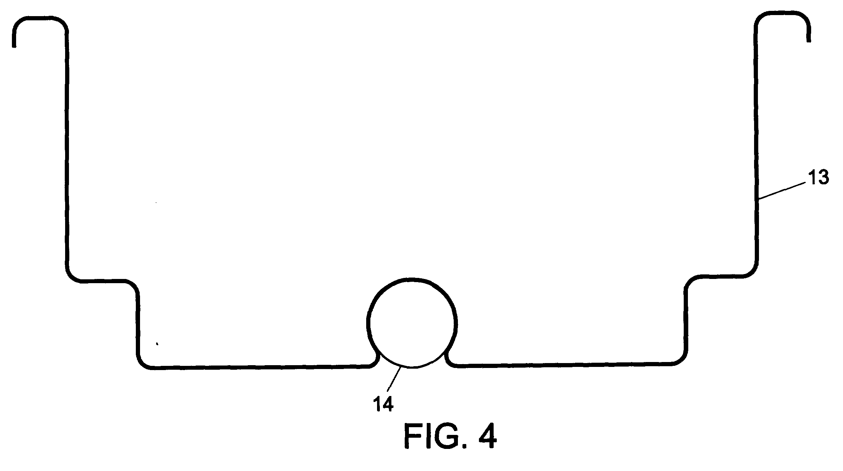

Fig. 4 is a cross-sectional view of a cultivating trough 13 with a hose 14 integrally formed therewith. The hose 14 can transmit warm water and cold water. The growth of the crop contained in the cultivating trough 13 can thus be excellently regulated. If required, openings may be provided in the hose 14, preferably on the sides, and openings may be provided in the trough section 13 at the place of the hose 14, so that the inside of the hose 14 is in fluid communication with the inside of the trough. The hose can thus be used to feed water to the inside of the trough. On the other hand, the hose 14 may also be designed as a drainage hose for discharging water from the cultivating medium contained in the cultivating trough 13. Such a drainage hose 14 forms an enormous water buffer for receiving excess water, if any, from the cultivating medium. It is self-evident that the shape and dimensions of the cultivating trough shown are only intended by way of example.

The present application is in no way limited to the practical examples given in the description and the figures. Many variations are possible within the scope of the invention defined by the claims.

Thus the plate section may have another cross-section, for instance without the horizontal part or such that the first part extends radially approximately in the center longitudinal plane of the pipe. Moreover, the plate section may be bent in all kinds of other ways, according to the desired cross-section. If required, several pipes may be incorporated in one plate section. The heating pipe as shown in the figures may of course be secured in other ways, for instance to a ceiling, and the first part thereof may, for instance, also extend horizontally, while the pipe 2 could of course also be located above the horizontal part 8. If required, the pipe may also be made of metal, for instance be a copper pipe, while, moreover, the pipe could be of relatively rigid design. Furthermore, a plate section according to the invention may be formed such that two heat transferring surface-increasing section parts may be provided, comparable to the first part as shown in Figs. 1 and 2, so that an even greater radiating and/or convection surface is obtained. Furthermore, for a method according to the present invention another deforming device may be used, for instance a section rolling device or the like. The rollers R shown in Fig. 3 are only schematic and by way of example. A suitable selection of the roll forming device for obtaining the desired plate section will be immediately clear to those skified in the art.

These and many comparable variations are deemed to fall within the scope of the invention.

## Claims

1. A method for manufacturing a heating pipe, cooling pipe or cultivating through, wherein a section is formed around a pipe, such that the section substantially surrounds the pipe and connects thereto, which section comprises at least one section part extending in a direction away from the pipe, to increase the heat-transferring surface of the pipe, which pipe, together with the section, is mounted in a position of use.

2. A method according to claim 1, wherein the section is manufactured by means of a roll forming device, through deformation of a band section having a length which is substantially greater than the width.

3. A method according to claim 1 or 2, wherein as pipe a flexible pipe, in particular a plastic hose, is used, which is fed during the formation of the section.

4. A method according to claim 3, wherein the pipe is fed from a reel, wherein sections and pipes having a great length are manufactured without welds.

5. A method according to any of the preceding claims, wherein sections and preferably also pipes having a length of more than 6 m, in particular having a length of more than 12 m and preferably more than 100 m are manufactured without welds.

6. A method according to any of the preceding claims, wherein the heating pipe, cooling pipe or cultivating trough is manufactured where it has to be built in.

7. A heating pipe, cooling pipe or cultivating trough, provided with a pipe having a relatively small cross-section, wherein a plate section is formed against the outside of the pipe, which plate section lies against the outer circumference of the pipe and partly or nearly completely encloses it and is provided with at least one outwardly extending second part as heat-transferring surface-increasing element.

8. A heating pipe, cooling pipe or cultivating trough according to claim 7, wherein the plate section is manufactured from a metal plate, in particular a metal plate provided with a coating which is anticorrosive and increases the heat-transferring capacity.

9. A heating pipe, cooling pipe or cultivating trough according to claim 7 or 8, wherein the pipe is flexible, in particular a plastic hose.

10. A heating pipe, cooling pipe or cultivating trough according to any of claims 7-9, which has a length of more than 6 m, more in particular more than 12 m and, for instance, more than 16 m, wherein at least the plate section and preferably also the pipe is designed in one piece and without welds.

11. A heating pipe, cooling pipe or cultivating trough according to any of claims 7-10, wherein the plate section is formed against the pipe, in particular with a roll forming device.

12. A heating pipe, cooling pipe or cultivating trough according to any of claims 7-11, wherein the plate section comprises at least a radially or tangentially extending first plate part, which, on a first side, merges into a substantially circular segment-shaped second plate part which encloses the pipe, wherein the free longitudinal edge of the second plate part is bent near the second plate part and preferably against it.

13. A cultivating trough provided with a pipe, wherein a plate section is formed against the outside of the pipe in the form of a cultivating trough, which plate section lies against the outer circumference of the pipe and encloses it nearly completely, which pipe is provided with an outflow opening which is in fluid communication with the inside of the trough, so that water supply to the cultivating material in the trough is possible via the pipe.

14. The use of a mobile roll forming device for forming, in place around a preferably flexible pipe, a plate section having at least a projecting, heat-transferring surface-increasing section part, wherein during use the pipe and the plate section are passed through the roll forming device.
